# EUROPÄISCHE PATENTSCHRIFT

(11) **EP 1 490 611 B1**
(45) Veröffentlichungstag und Bekanntmachung des Hinweises auf die Patenterteilung: **30.11.2005**
(21) Anmeldenummer: 02806314.7
(22) Anmeldetag: 11.12.2002
(51) Int. Cl.: F16J 15/02, F16J 15/12

(54) **GEHÄUSEDECKEL MIT AKUSTISCH ENTKOPPELTEM UND ABSTIMMBAREM DICHTSYSTEM**
CASING COVER WITH ACOUSTICALLY DECOUPLED AND ADJUSTABLE SEALING SYSTEM
COUVERCLE DE CARTER A SYSTEME D'ETANCHEITE REGLABLE ET A DECOUPLAGE ACOUSTIQUE

(30) Priorität: 19.01.2002 DE 10201953
(43) Veröffentlichungstag der Anmeldung: 29.12.2004
(73) Patentinhaber: Federal-Mogul Sealing Systems Bretten GmbH, 75015 Bretten (DE)
(72) Erfinder: SALAMEH, Ralf, 75053 Gondeslheim (DE)
(86) Internationale Anmeldenummer: PCT/DE2002/004531
(87) Internationale Veröffentlichungsnummer: WO 2003/060356

(56) Entgegenhaltungen:
- DE-A- 10 105 625
- DE-A- 19 736 467
- DE-U- 20 006 571
- US-A- 4 026 565
- US-A- 4 345 739
- US-A- 4 597 583

## Beschreibung

Die Erfindung beschreibt einen akustisch entkoppelten Gehäusedeckel in Form einer Zylinderkopfhaube oder Ölwanne für eine Verbrennungskraftmaschine zum lösbaren, flüssigkeitsdichten Befestigen am Motorblock, mit einem elastomeren, T-förmigen Dichtungsprofil, dass in eine am Rand des Gehäusedeckels vorgesehene Nut eingelassen ist, wobei die beiden kurzen Schenkel des T-förmigen Dichtungsprofils auf dem Rand des Gehäusedeckels aufliegen und der lange Schenkel in die Nut hineinreicht wobei das Dichtungsprofil an seiner der Montagefläche zugewandten Seite eine Profilierung aufweist.

Aus der US 4026565 A ist eine Flanschdichtung zu entnehmen, bei der die Dichtung mittels Schrauben verspannt wird und die Dichtung dabei im voll im Kraftfluß liegt. Damit die Dichtung beim Anziehen der Schrauben nicht zerstört wird oder im Laufe der Zeit nicht relaxiert, sind seitlich der Dichtung Verpressungsbegrenzer vorgesehen. Eine akustischen Entkopplung ist hierdurch nicht gegeben.

Dichtungen aus elastomeren Werkstoffen zwischen ruhenden Bauteilen von Verbrennungskraftmaschinen müssen heute einer Vielzahl von Anforderungen gerecht werden, die über ihre eigentliche Dichtfunktion weit hinausgehen. Die Produktentwicklung berücksichtigt neben den spezifischen Werkstoffeigenschaften der Elastomere, den auftretenden Medien und Drücken auch die speziellen geometrischen Bedingungen der Einbaustellen.
Insbesondere ein Schwingen der Anbauteile, wobei hier im besonderen Resonanzkörper, wie beispielsweise Gehäusedeckel, Zylinderkopfhauben oder Öldeckel, genannt werden müssen, können zu einer unangenehmen Geräuschentwicklung führen. Damit die Schwingungen der Verbrennungskraftmaschine nicht bzw. nur gedämpft an die Anbauteile übertragen werden, ist es allgemein üblich elastomere Dichtungsprofile in oder an die Anbauteile zu integrieren, die dann für eine akustische Entkopplung der Anbauteile sorgen. Durch diese Maßnahme kann die Geräuschentwicklung häufig beträchtlich reduziert werden.
Bei dieser Art der akustischen Entkopplung des Gehäusedeckels wird ein elastomeres Dichtungsprofil zwischen dem Gehäusedeckel und dem Motorblock positioniert. Die Auflagefläche des Dichtungsprofils auf dem Motorblock wird dabei als Dicht- oder Montagefläche bezeichnet.
Eine Form von Dichtungen, die zur akustischen Entkopplung von Gehäusedeckeln eingesetzt wird, ist die Elastomerdichtung mit einem T-Profil. Die Formdichtung mit einem T-Profil ist aufgrund ihrer großen dichtenden Elastomerbauhöhe in der Lage, ein weites Feld an Maß und Formtoleranzen an den Umbauungsteilen zu überbrücken. Der große Verpressungsweg der Dichtung ermöglicht einen sehr guten Ausgleich von Unebenheiten. Die Dichtung kann verliersicher an einem Gehäusedeckel vormontiert werden, eine spanende Nacharbeit der hierzu erforderlichen Nut in der gegossenen Kunststoff- oder Aluminiumhaube ist nicht notwendig.

In der DE 38 15 511 A1 wird eine gattungsgemäße, entkoppelte, gummielastische Abdichtung zur Montage zwischen zwei lösbaren Gehäuseteilen beschrieben. Eine Abdichtung mit einer eine Profildichtung aufnehmenden Nut in einem der sich aus Seitenwänden zusammensetzenden Gehäuseteilen, wobei jede Seitenwand eines der Gehäuseteile im Dichtungsbereich einen Schutzkragen aufweist, der gemeinsam mit der Seitenwand die Nut bildet, in die die Profildichtung stützkräftefrei eingelegt ist. Durch diese besondere Abdichtung zwischen den Gehäuseteilen werden die Spreizkräfte in der Nut so gering wie möglich gehalten und die Stützkraft für die Profildichtung nicht über die Nutflanken oder den Nutboden, sondern durch die auf der Montagefläche aufliegende Profildichtung aufgebracht, welche die Stützkräfte direkt in die Seitenwand einleitet. Zur hinreichenden Dichtheit ist an der Abdichtung, in Richtung der Montagefläche, eine Profilierung vorgesehen.
Aus der DE 19736467 A ist eine ähnliche Dichtung zu entnehmen.
Nachteilig bei dieser Art der Abdichtung ist, dass die Stüzkraft unmittelbar auf die profilierte Dichtung aufgebracht wird. Da bei entkoppelten Dichtsystemen oft relativ weiche Elastomermischungen verwendet werden, ist die Abstimmung der Stützkräfte auf die Dichtung schwierig. Im Extremfall kann die Dichtung in Teilbereichen über die Fließgrenze hinaus belastet werden, so dass nicht reversible Schädigungen auftreten können. Ein weiterer Nachteil ist die unzureichende Formsteifigkeit dieser Dichtungen, so dass sie schwer zu handhaben und zu montieren sind.

Um die Formsteifigkeit gattungsgemäßer Dichtungen zu erhöhen, wird in dem Aufsatz "Elastomere Formdichtungen für ruhende Bauteile am Motor" aus der Zeitschrift: Kautschuk Gummi Kunststoffe, 46. Jahrgang, Nr. 12/93, vorgeschlagen, die reinen Elastomerdichtungen zu versteifen. Bei diesen versteiften Dichtungen wird das Elastomer an oder um einen festen Tragkörper, z. B. aus Aluminium, Stahlblech oder Kunststoff, vulkanisiert.
Dem Aufsatz ist u. a. eine T-förmige Dichtung zu entnehmen, dabei liegen die kurzen Seiten der T-förmigen Dichtung auf dem Rand des Gehäusedeckels auf und die lange Seite reicht in die, am Rand des Gehäusedeckels befindliche Nut hinein. Weiterhin werden in dem Aufsatz verschiedene Dichtungen beschrieben, die einen Trägerrahmen beinhalten oder bei denen an einem Trägerrahmen ein Dichtungsprofil befestigt ist. Diese Tägerrahmen dienen dabei stets zur Versteifung oder als Distanzelement der elastomeren Dichtung. Dass mittels des Trägerrahmens eine gezielte Beeinflussung der Härte der Dichtung vorgenommen werden kann, kann diesem Aufsatz nicht entnommen werden.

Aufgabe der Erfindung ist es somit, ein T-förmiges Dichtungsprofil für einen akustisch entkoppelten Gehäusedeckel zu entwickeln, bei dem die Härte und die auf die Dichtung wirkenden Kräfte im Bereich der Dichtfläche gezielt beeinflusst werden können.

Diese Aufgabe wird erfindungsgemäß durch den kennzeichnenden Teil des Patentanspruchs 1 gelöst, vorteilhafte Weiterbildungen der Erfindung sind in den Unteransprüchen dokumentiert.

Der erfindungsgemäße Gedanke überwindet die vorgenannten technischen Nachteile dadurch, dass in mindestens einem der kurzen Schenkeln des T-förmigen Dichtungsprofils ein Abstimmelement vorgesehen ist, dass eine vom elastomeren Dichtungsprofilwerkstoff abweichende Härte aufweist.

Mittels des erfindungsgemäßen Einbringens eines Abstimmelementes in mindestens einen der kurzen Schenkel des Dichtungsprofils ist es nun möglich, die Härte des Dichtungsprofils in weiten Bereichen gezielt zu beeinflussen.
Auch können die durch die Befestigungsschrauben auf das Dichtungsprofil aufgebrachten Kräfte nun definiert verteilt werden. Eine Belastung des Dichtungsprofilwerkstoffes bis an oder über die Fließgrenze hinweg kann somit ausgeschlossen werden.
Durch den Einsatz unterschiedlicher Abstimmelemente in einem gleichen Elastomer ist es auch möglich, eine Vielzahl von Anwendungsfällen abzudecken und mit minimierten Herstellungskosten zu produzieren.

Erfindungsgemäß kann das Abstimmelement stoffschlüssig und unlösbar mit dem Dichtungsprofil verbunden werden. Dabei kann das Abstimmelement mittels Kleben oder mittels Vulkanisieren in das Elastomer eingefügt werden. Eine stoffschlüssige Verbindung mittels Umspritzen erfolgt in dem Fall, in dem eine stoffschlüssige Affinität zwischen den beiden Werkstoffen gegeben ist.
Die formschlüssige Einbindung des Abstimmelementes in das Dichtungsprofil bietet gleich mehrere Vorteile. Bei einer nachträglichen Montage kann eine individuelle Abstimmung auch erst unmittelbar vor dem Einbau erfolgen. Bei Fehlern oder Beschädigungen am Abstimmelement kann dieses separat getauscht werden. Bei einem Umspritzen ist der Formschluss dann gegeben, wenn keine stoffschlüssige Affinität zwischen beiden Werkstoffen gegeben ist.

Das Abstimmelement kann erfindungsgemäß aus einem polymeren und/oder einem metallischen Werkstoff gefertigt werden. Hierbei können beliebige polymere Werkstoffe zum Einsatz kommen, bevorzugt werden die Werkstoffe eingesetzt, die eine größere Härte als der Dichtungswerkstoff aufweisen. Ein weiterer Vorteil ist, dass durch den Einsatz unterschiedlich harter Polymere die Flächenpressung zwischen Gehäusedeckel und Montagefläche nun genau eingestellt werden kann, ohne den Dichtungswerkstoff zu überlasten. Als eine weitere Ausführungsvariante, wird in der Erfindung vorgeschlagen, als Abstimmelement einen polymeren Werkstoff zu verwenden, der ein frequenzabhängiges Schwingungsverhalten aufweist. Hierbei ist zum Beispiel an einen gelartigen Werkstoff gedacht. Somit könnten auch unterschiedlichste Frequenzen absorbiert werden.
Als metallische Abstimmelemente können ebenfalls beliebige Werkstoffe, wie Aluminium, Stahl oder Legierungen dieser Werkstoffe, eingesetzt werden.
Es ist aber auch vorstellbar, eine Kombination aus einem metallischen und einem polymeren Werkstoff, als Abstimmelement, in die Dichtung einzubringen. So kann beispielsweise ein metallischer Formkörper zuerst mit einem Polymer umspritz und anschließend in die Dichtung als Abstimmelement eingebracht werden.

Die Querschnittsgeometrie der Abstimmelemente ist, je nach Anmeldungsfall, veränderbar. So sind runde, rechteckige, quadratische, ovale, etc. Querschnittsformen vorstellbar. Aber auch die Dicke des Abstimmelementes kann variieren. So ist es erfindungsgemäß vorstellbar, dass das Abstimmelement im Bereich der Befestigungsschrauben dünner ausgeführt ist, als im Bereich zwischen den Schrauben. So kann mit Hilfe der Dicke des Abstimmelementes eine Steuerung des Dichtspaltes und der auf die Dichtung wirkenden Kräfte erfolgen.
Es besteht weiterhin die Möglichkeit, das Abstimmelement so zu positionieren und auszubilden, dass es die eigentliche Dichtung vor dem Angriff von äußeren Medien schützt und/oder die Permeabilität verringert. Vorstellbar ist auch, an dem Abstimmelement Halteelemente auszubilden, an denen an der Innen und/oder Außenseite Sensoren, Kabel, etc. befestigt werden können. Eine Möglichkeit wäre auch eine Montagehilfe an dem Abstimmelement zu befestigen.

Das Abstimmelement kann erfindungsgemäß umlaufend oder in Teilbereichen in dem Dichtungsprofil vorliegen. In Teilbereichen dann, wenn zum Beispiel eine Steuerung des Dichtspalts und der Kräfte, die durch die Befestigungsschrauben in der Dichtung erzeugt werden, erfolgen soll. So können ganz gezielt in bestimmten Bereichen, zum Beispiel an den Verschraubungspunkten, größere Gegenkräfte erzeugt werden, ohne dass die Dichtfunktion darunter leidet.

Erfindungsgemäße Gestaltungsbeispiele von Dichtungen mit integrierten Abstimmelementen werden nachstehend anhand von Zeichnungen und im weiteren in der Beschreibung näher erläutert. Es zeigen:
- Figur 1: ein erfindungsgemäßes Ausführungsbeispiel einer Dichtung mit integrierten Abstimmelementen im unverbauten Zustand
- Figur 2: ein erfindungsgemäßes Ausführungsbeispiel einer Dichtung mit integrierten Abstimmelementen im eingebauten Zustand

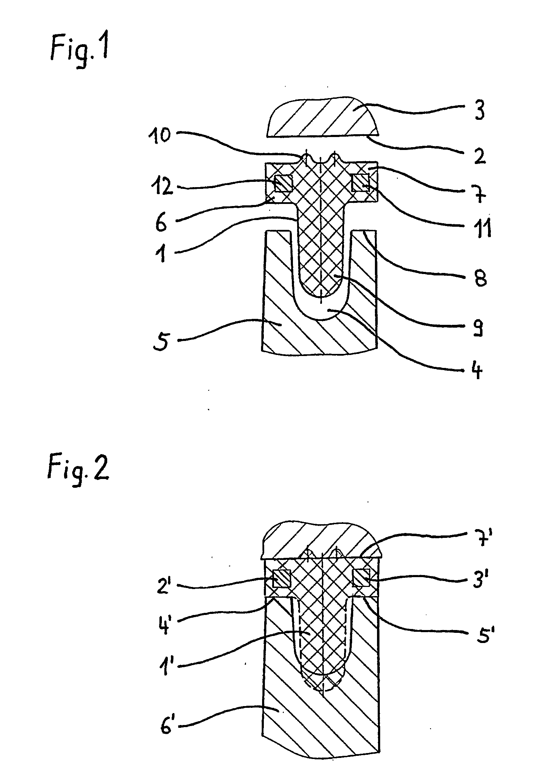

In Figur 1 ist der Schnitt durch eine erfindungsgemäße Dichtung 1 im unverbauten Zustand dargestellt. Die Dichtfläche 2 wird vom Motorblock 3 gebildet und die T-förmige, elastomere Dichtung 1 wird in die Nut 4 des Gehäusedeckels 5 eingefügt. Dabei liegen die kurzen Schenkel 6, 7 des T-förmigen Dichtungsprofils 1 auf dem Rand 8 des Gehäusedeckels 5 auf und der lange Schenkel 9 reicht in die Nut 4 hinein. Zusätzlich besitzt das Dichtungsprofil 1 an seiner, der Dichtfläche 2 zugewandten Seite eine Profilierung 10. In diesem Ausführungsbeispiel besitzt das Dichtungsprofil 1 zwei Abstimmelemente 11, 12. Die Abstimmelemente 11, 12 wurden dabei von dem elastomeren Dichtungswerkstoff umspritzt und besitzen eine quadratische Form.
Figur 2 zeigt den Schnitt durch eine erfindungsgemäße Dichtung 1' im eingebauten Zustand. Das Dichtungsprofil 1' ist dabei im unverformten Zustand wiedergeben. Es ist deutlich zu erkennen, dass die Abstimmelemente 2', 3' im Kraftfluß, zwischen dem Rand 4', 5' des Gehäusedeckels 6' und der Dichtfläche 7', liegen.

## Patentansprüche

1. Akustisch entkoppelter Gehäusedeckel (5, 6') in Form einer Zylinderkopfhaube oder Ölwanne für eine Verbrennungskraftmaschine zum lösbaren, flüssigkeitsdichten Befestigen am Motorblock (3), mit einem elastomeren, T-förmigen Dichtungsprofil (1, 1'), das in eine am Rand (8, 4', 5') des Gehäusedeckels (5, 6') vorgesehene Nut (4) eingelassen ist, wobei die beiden kurzen Schenkel (6, 7) des T-förmigen Dichtungsprofils (1, 1') auf dem Rand (8, 4', 5') des Gehäusedeckels (5, 6') aufliegen und der lange Schenkel (9) in die Nut (4) hineinreicht und wobei das Dichtungsprofil (1, 1'), an seiner der Montagefläche (2, 7') zugewandten Seite, eine Profilierung (10) aufweist, **dadurch gekennzeichnet, dass** in mindestens einem der kurzen Schenkel (6, 7) des T-förmigen Dichtungsprofils (1, 1') ein Abstimmelement (11, 12, 2', 3') vorgesehen ist, das eine vom elastomeren Dichtungsprofilwerkstoff abweichende Härte aufweist wobei das Abstimmelement (11, 12, 2', 3') aus einem polymeren, bevorzugt ein härterer, elastomerer Werkstoff als der Dichtungsprofilwerkstoff, und/oder einem metallischen Werkstoff gefertigt und formschlüssig mit dem Dichtprofil (1, 1') verbunden ist, wobei das Abstimmelement (11, 12, 2', 3') von dem elastomeren Dichtungsprofilwerkstoff umspritzt ist oder nachträglich in das Dichtungsprofil (1, 1') eingefügt ist.

2. Akustisch entkoppelter Gehäusedeckel nach Anspruch 1, **dadurch gekennzeichnet, dass** das Abstimmelement (11, 12, 2', 3') ein polymerer Werkstoffist, der ein frequenzabhängiges Schwingungsverhalten aufweist.

3. Akustisch entkoppelter Gehäusedeckel nach einem der Ansprüche 1 bis 2, **dadurch gekennzeichnet, dass** das Abstimmelement (11, 12, 2', 3') umlaufend oder nur in Teilbereichen, vorzugsweise im Bereich der Verschraubungen, in das Dichtungsprofil (1, 1') eingelassen ist.

4. Akustisch entkoppelter Gehäusedeckel nach einem der Ansprüche 1 bis 3, **dadurch gekennzeichnet, dass** das Abstimmelement (11, 12, 2', 3') unterschiedliche Querschnittsgeometrien und/oder unterschiedliche Dicken aufweist.

## Claims

1. Acoustically decoupled casing cover (5, 6') in the form of a cylinder head cover or oil trough for an internal combustion engine for detachable, liquid-impermeable mounting on the engine block (3), having an elastomeric, T-shaped gasket profile (1, 1') which is recessed in a groove (4) provided at the edge (8, 4', 5') of the casing cover (5, 6'), the two short members (6, 7) of the T-shaped gasket profile (1, 1') being supported on the edge (8, 4', 5') of the housing cover (5, 6') and the long member (9) extending into the groove (4) and the gasket profile (1, 1') having a profiling (10) on its side orientated towards the mounting face (2, 7'), **characterised in that** in at least one of the short members (6, 7) of the T-shaped gasket profile (1, 1'), an adjustment element (11, 12, 2', 3') is provided which has a hardness differing from the elastomeric gasket profile material, the adjustment element (11, 12, 2', 3') being manufactured from a polymeric, preferably a harder, elastomeric material than the gasket profile material and/or from a metallic material and being connected in a form-fit to the gasket profile (1, 1'), the adjustment element (11, 12, 2' 3') being injection moulded with the elastomeric gasket profile material or being inserted subsequently into the gasket profile (1, 1').

2. Acoustically decoupled housing cover according to claim 1, **characterised in that** the adjustment element (11, 12, 2', 3') is a polymeric material which has a frequency-dependent oscillation behaviour.

3. Acoustically decoupled housing cover according to one of the claims 1 to 2, **characterised in that** the adjustment element (11, 12, 2', 3') is recessed in the gasket profile (1, 1') circumferentially or only in partial regions, preferably in the region of the screwed connections.

4. Acoustically decoupled casing cover according to one of the claims 1 to 3, **characterised in that** the adjustment element (11, 12, 2', 3') has different cross-sectional geometries and/or different thicknesses.

## Revendications

1. Couvercle de boîtier à découplage acoustique (5, 6'), sous la forme d'un couvercle supérieur des soupapes ou d'une cuvette collectrice d'huile pour un moteur à combustion interne, pour une fixation amovible et étanche aux liquides sur le bloc moteur (3), avec un profilé d'étanchéité élastomère en forme de T (1, 1'), qui est introduit dans une rainure (4) prévue sur le bord (8, 4', 5') du couvercle de boîtier (5, 6'), les deux branches courtes (6, 7) du profilé d'étanchéité en forme de T (1, 1') s'appliquant sur le bord (8, 4', 5') du couvercle de boîtier (5, 6') et la branche longue (9) arrivant jusque dans la rainure (4) et le profilé d'étanchéité (1, 1') comportant un profilage (10) sur sa face dirigée vers la surface de montage (2, 7'), **caractérisé en ce que** dans au moins l'une des branches courtes (6, 7) du profilé d'étanchéité (1, 1') en forme de T, on a prévu un élément d'ajustement (11, 12, 2', 3'), qui présente une dureté différente de celle du matériau élastomère du profilé d'étanchéité, l'élément d'ajustement (11, 12, 2', 3') étant fabriqué en un matériau polymère, élastomère, de préférence plus dur que le matériau du profilé d'étanchéité et/ou en un matériau métallique et étant relié par complémentarité de forme avec le profilé d'étanchéité (1, 1'), l'élément d'ajustement (11, 12, 2', 3') étant enrobé par le matériau élastomère du profilé d'étanchéité ou inséré ultérieurement dans le profilé d'étanchéité (1, 1').

2. Couvercle de boîtier à découplage acoustique selon la revendication 1, **caractérisé en ce que** l'élément d'ajustement (11, 12, 2', 3') est un matériau polymère faisant preuve d'un comportement aux vibrations dépendant de la fréquence.

3. Couvercle de boîtier à découplage acoustique selon l'une quelconque des revendications 1 à 2, **caractérisé en ce que** l'élément d'ajustement (11, 12, 2', 3') est intégré dans le profilé d'étanchéité (1, 1') de façon périphérique ou uniquement dans des zones partielles, de préférence dans la zone des vissages.

4. Couvercle de boîtier à découplage acoustique selon l'une quelconque des revendications 1 à 3, **caractérisé en ce que** l'élément d'ajustement (11, 12, 2', 3') présente différentes géométries de section transversale et/ou différentes épaisseurs.
